# EUROPEAN PATENT SPECIFICATION

(11) **EP 3 382 100 B1**
(45) Date of publication and mention of the grant of the patent: **15.07.2020**
(21) Application number: 17196057.8
(22) Date of filing: 12.10.2017
(51) Int. Cl.: E01F 3/00, B64F 1/00, B64F 1/20

(54) **LED LIGHTING APPARATUS WITH DUAL LIGHTING SYSTEM FOR HELICOPTER LANDING AREA**
LED-BELEUCHTUNGSVORRICHTUNG MIT DUALEM BELEUCHTUNGSSYSTEM FÜR HUBSCHRAUBERLANDEBEREICH
APPAREIL D'ÉCLAIRAGE À DEL À DOUBLE SYSTÈME D'ÉCLAIRAGE DE ZONE D'ATTERRISSAGE D'HÉLICOPTÈRE

(30) Priority: 27.03.2017 KR 20170038662
(43) Date of publication of application: 03.10.2018
(73) Proprietor: Daeyang Electric Co., Ltd., Busan 49438 (KR)
(72) Inventor: LEE, Soung Soo, 49322 Busan, (KR); AN, Ki Joo, 47352 Busan (KR); ROH, Su Jin, 48456 Busan (KR)
(74) Representative: Gunzelmann, Rainer

(56) References cited:
- WO-A1-2015/056200
- WO-A1-2016/076715
- KR-B1- 101 080 866
- CAA Safety Regulation Group: "Standards for offshore helicopter landing areas", , 8 December 2016 (2016-12-08), XP055448593, ISBN: 978-0-11-792914-2 Retrieved from the Internet: URL:http://publicapps.caa.co.uk/docs/33/CA P%20437%20DEC16.pdf [retrieved on 2018-02-06]
- John Downer ET AL: "When failure is an option: redundancy, reliability and regulation in complex technical systems", , 1 May 2009 (2009-05-01), XP055600297, Retrieved from the Internet: URL:http://eprints.lse.ac.uk/36537/1/Dissp aper53.pdf [retrieved on 2019-06-28]
- Anonymous: "Why LED Strip Lights Always Need an LED Driver", , 27 September 2015 (2015-09-27), XP055600683, Retrieved from the Internet: URL:https://web.archive.org/web/2015092703 2749/https://www.topbulb.com/blog/importan ce-led-drivers-strip-lights/ [retrieved on 2019-06-28]

## Description

### BACKGROUND OF THE INVENTION

### Field of the Invention

The present invention relates to an LED lighting apparatus with a dual lighting system for a helicopter landing area. More particularly, the present invention relates to an LED lighting apparatus with a dual lighting system for a helideck in a helicopter landing area, the LED lighting apparatus being able to keep operating even if some of LEDs abnormally operate by operating the other LEDs through the dual lighting system, being able to control the operation of the LEDs in various ways by changing various operation modes to cope with various situations when a helicopter lands and takes off, being able to be easily installed and maintained because it is formed by assembling separate lighting assemblies, and having a structure not interfering with a helicopter landing and taking off by minimizing projective areas.

### Description of the Related Art

In general, a helideck in a helicopter landing area requires a lighting apparatus for showing the location of the helicopter landing area the overcome low visibility and guide helicopters to a safety landing at night. Further, it is necessary to employ helicopters for ocean structures in order to transport supplies and manpower.

Accordingly, LED lighting is necessary for such helicopter landing areas under ICAO and CAP437 and a lighting apparatus is always turned on on ocean structures for anti-collision and work at night. Further, there has been established a color rule that prescribes a definite color difference from existing colors of ocean structures so that helicopter pilots can easily find the location of helicopter landing areas by combining yellow and green of LED colors on the helicopter landing areas due to common light sources of daylight blue and neutral white.

However, when existing light sources such as xenon flood light are applied, visibility of helicopter landing areas is decreased and the brightness of the light sources is not sufficient due to surrounding common light sources. Accordingly, the rule standardized and legislated appliance of LED lighting on helicopter landing areas through research of CAA about visibility for helicopter pilots, and this research has been applied to ICAO. However, according to the rule, existing light source devices are at most replaced with LED devices and the rule is not applied to a dual system that is a basic safety standard for preventing a collision at sea. Further, there is no product for helicopter landing areas that satisfy the rule.

The dual system may mean a minimum safety security rescue system that enables a lamplight having at least two light sources and drivers and producing signals for preventing a collision to always operate by operating one of the light sources and drivers in ordinary times and operating the other light source or driver when the light source of the driver breaks or dies.

In the related art, such a dual system that is a safety security rescue system was required for helicopter landing areas, but it was not applied due to restrictions on height, structure, and whether required backlight is satisfied.

In helicopter landing areas, there should not be projective products, if possible, at the location where helicopters land to avoid interference with lading/taking-off of the helicopters, and if there are projective products, a chamber having a projective height of 25mm or less and edges having a height of 6mm or less and an angle of 30 degrees or less should applied to avoid interference with movement of helicopters. Due to these structural restrictions, it is difficult to apply a dual system to same-sized lighting apparatuses that are signal systems. In particular, in order to apply a dual system, there is a need for a double number of LEDs, a double number of LED drivers, and a system that can check the statuses of the LEDs and LED drivers, an alarm that can immediately show a problem when the problem is generated, and double the number of cables, so it is a severe restriction to integrate and apply these functions to a limited size.

Further, for LED lighting at helicopter landing areas, it is required to emit light far at an angle of 0 degree to 10 degrees from the horizon in order to prevent interference with the visual field of the pilots when landing helicopters and enable pilots to quickly find the location from a far distance. Further, it is required to minimize interference with visibility due to light sources when helicopters land and take off and form a minimum visual cue through symmetric backlight from the longitudinal direction of the LED lighting.

It is advantageous to apply the same LEDs for the symmetric backlight, and when several LEDs are applied in a dual mode, the reserve LEDs are not operated in ordinary times, so it is difficult to satisfy required backlight due to interference of the LEDs. Further, when several LEDs are applied, the LEDs are arranged with regular intervals, unlike using one LED, so interference is caused by overlap of light and the minimum and maximum values of required flux of light are not satisfied.

Further, a predetermined number of products are connected in one line in the related art, so if a problem is generated in the line, the entire line is not operated. Accordingly, it is required to find the problematic part only through a half or a predetermined section of the line in order to repair the line. Further, the cover that protects the cable connecting the products for LED lighting is fixed by rivets, so maintenance is difficult.

Further, edges are applied to all connection section in LED lighting due to the restrictions on height and edges, so the landing gears of helicopters are influenced by bolts protruding at the edges.

Therefore, in order to solve various problems and limits of the lighting apparatuses or lighting systems for helicopter landing areas, the inventor(s) has invented an LED lighting apparatus having a dual lighting system for a helideck in a helicopter landing area, the LED lighting apparatus being able to keep operating even if some of LEDs abnormally operate by operating the other LEDs through the dual lighting system, that can control the operation of the LEDs in various ways by changing various operation modes to cope with various situations when a helicopter lands and takes off, that can be easily installed and maintained because it is formed by assembling separate lighting assemblies, and that has a structure not interfering with a helicopter landing and taking off by minimizing projective areas.

WO 2016/076715 discloses an illumination system arranged to form a touchdown circle and/or a helipad H-area of a heliport.

### SUMMARY OF THE INVENTION

In order to solve the problems described above, the present invention provides an LED lighting apparatus with a dual lighting system for a helicopter landing area, according to appended independent claim 1. More particularly, the present invention relates to an LED lighting apparatus with a dual lighting system for a helideck in a helicopter landing area, the LED lighting apparatus being able to keep operating even if some of LEDs abnormally operate by operating the other LEDs through the dual lighting system, being able to control the operation of the LEDs in various ways by changing various operation modes to cope with various situations when a helicopter lands and takes off, being able to be easily installed and maintained because it is formed by assembling separate lighting assemblies, and having a structure not interfering with a helicopter landing and taking off by minimizing projective areas.

An LED lighting apparatus with a dual lighting system for a helicopter landing area according to an embodiment of the present invention includes: a plurality of first lighting assemblies circularly connected to form a circle marking in a size that is half the size of a helideck on a helicopter landing area; a plurality of second lighting assemblies forming a symbol marking in the circular marking; a power supply supplying power to the first and second lighting assemblies; and a controller receiving status information signals from the first and second lighting assemblies and transmitting status change signals for turning on and off the first and second lighting assemblies.

The first lighting assembly may include: a first base plate fixed on the helideck; a first lighting module coupled to a top of the first base plate; and first covers covering tops of first connection cables connecting the first lighting module and another adjacent first lighting module to each other, and the second lighting assembly may include: a second base plate fixed on the helideck; a second lighting module coupled to a top of the second base plate; and second covers covering second connection cables connecting the second lighting module and another adjacent second lighting module to each other.

The first and second base plates may be riveted on the helideck.

The first and second lighting modules may be bolted to the first and second base plates, respectively.

The first lighting module may include: first lighting base plate fastened to the first base plate; a plurality of first LED modules disposed on the first lighting base plate; and a first LED driver electrically connected with the first LED modules and connected with the first connection cables at a side thereof, and the second lighting module may include: a second lighting base plate fastened to the second base plate; a plurality of second LED modules disposed on the second lighting base plate; and a second LED driver electrically connected with the second LED modules and connected with the second connection cables at a side thereof.

The first and second LED drivers transmit the status information signals to the controller and receive the status change signals from the controller.

The first LED modules each include: a plurality of first and second LEDs having different colors; (optionally) a first lens disposed over the first and second LEDs; (optionally) a first protective cover disposed over the first lens; and (optionally) a second protective cover disposed over the first protective cover, and the second LED modules each include: a plurality of third and fourth LEDs having different colors; (optionally) a second lens disposed over the third and fourth LEDs; (optionally) a third protective cover disposed over the second lens; and (optionally) a fourth protective cover disposed over the third protective cover.

The first and second LEDs may have a yellow color, and the third and fourth LEDs may have a green color.

The first and second lenses may change radiation angles of the first to fourth LEDs.

The first and third protective covers may be made of yellow plastic resin and opaque white plastic resin, respectively.

The second and fourth protective covers may be made of plastic resin that is not damaged or deformed by UV.

The status change signals that are transmitted from the controller may include: a first operation mode signal for operating all of the first to fourth LEDs at 60 cd (candela) or less; a second operation mode signal for operating all of the first to fourth LEDs at 60 cd or more with twice a brightness in comparison to the first operation mode signal; a third operation mode signal for operating the first and second LEDs at 60 cd or less or operating the third and fourth LEDs at 60 cd or less; a fourth operation mode signal for operating the first and second LEDs at 60 cd or less with twice a brightness in comparison to the third operation mode signal or operating the third and fourth LEDs at 60 cd or less with twice a brightness in comparison to the third operation mode signal; and a fifth operation mode signal for turning on the first LED having a yellow color and keeping the first LED turned on and turning on and off the second LED having a green color, depending on wind direction information.

The first and second LED drivers may detect in real time operation statuses of the first to fourth LEDs, and when receiving the third operation mode signal or the fourth operation mode signal, the first and second LED drivers may operate the second LED when the first LED abnormally operates, operate the first LED when the second LED abnormally operates, operate the fourth LED when the third LED abnormally operates, and operate the third LED when the fourth LED abnormally operates.

When the first to fourth LEDs abnormally operate, the first and second LED drivers may transmit a failure alarm signal to the controller and an alarm connected to the controller may generate an alarm even on the basis of the failure alarm signal.

According to an aspect of the present invention, it is possible to keep operating a lighting apparatus even if some of LEDs abnormally operate by operating the other LEDs through the dual lighting system, control the operation of the LEDs in various ways by changing various operation modes to cope with various situations when a helicopter lands and takes off, easily install and maintain the lighting apparatus because the lighting apparatus is formed by assembling separate lighting assemblies, and prevent interference with a helicopter landing and taking off by minimizing projective areas.

In particular, since dual LEDs that can separately operate are provided, the lifespan is increased two times or more in comparing to a single LED.

Further, according to an aspect of the present invention, when all LEDs are operated, it becomes easy to move and work in a helicopter landing area.

Further, according to an aspect of the present invention, all of bolts for assembling can be hidden, so damage to the landing gears of a helicopter can be minimized.

Further, according to an aspect of the present invention, connection cables for connecting lighting modules can be exposed by simply opening covers by loosening bolts, installation and maintenance are easy.

Further, according to an aspect of the present invention, LEDs are turned on/off such that colors are switched, depending on the direction of wind, it is possible to provide visual information for a safe flight to a helicopter pilot by visually showing the direction of wind.

### BRIEF DESCRIPTION OF THE DRAWINGS

FIG. 1 is a view schematically showing the configuration of an LED lighting apparatus 100 with a dual lighting system for a helicopter landing area;
FIGS. 2A and 2B are views schematically showing the entire shape of a first lighting assembly 110 shown in FIG. 1;
FIG. 3 is an exploded view showing the parts of the first lighting assembly 110 shown in FIGS. 2A and 2B;
FIG. 4 is a view schematically showing the configuration of a first lighting module 112 shown in FIGS. 2A and 2B;
FIG. 5 is a view schematically showing the configuration of first LED modules 112b shown in FIG. 3;
FIGS. 6A and 6B are views schematically showing the entire shape of a second lighting assembly 120 shown in FIG. 1;
FIG. 7 is an exploded view showing the parts of the second lighting assembly 120 shown in FIGS. 6A and 6B;
FIG. 8 is a view schematically showing the configuration of a second lighting module 122 shown in FIGS. 6A and 6B;
FIG. 9 is a view schematically showing the configuration of second LED modules 122b shown in FIG. 7;
FIG. 10 is a view showing a second lighting assembly 120' having two second LED modules 122b; and
FIGS. 11A and 11B are views showing a plurality of first lighting assemblies 110 connected through first connection cables 114 and a plurality of second lighting assemblies 120 connected through second connection cables 124.

### DETAILED DESCRIPTION OF THE INVENTION

Hereinafter, exemplary embodiments are described to help understand the present invention. However, the following embodiments are provided to help easily understand the present invention and the present invention is not limited to the embodiments.

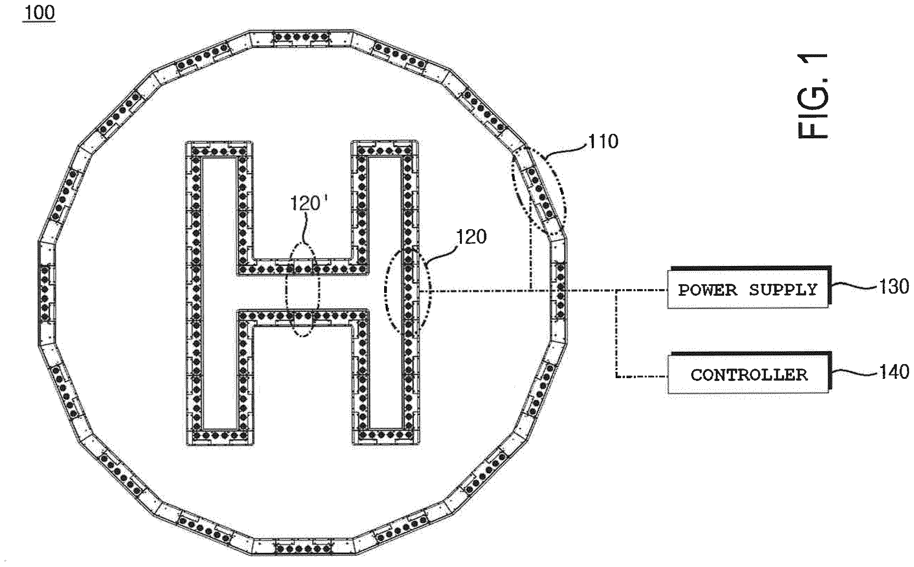

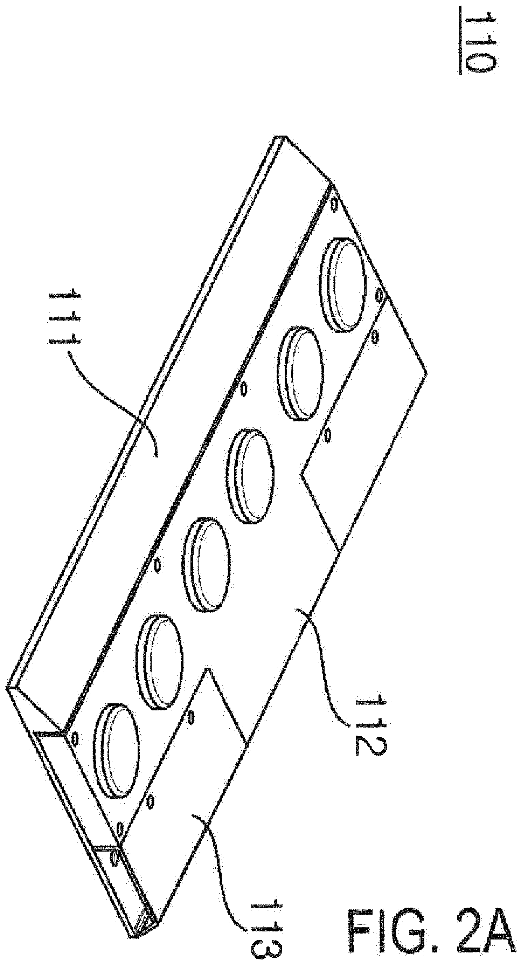

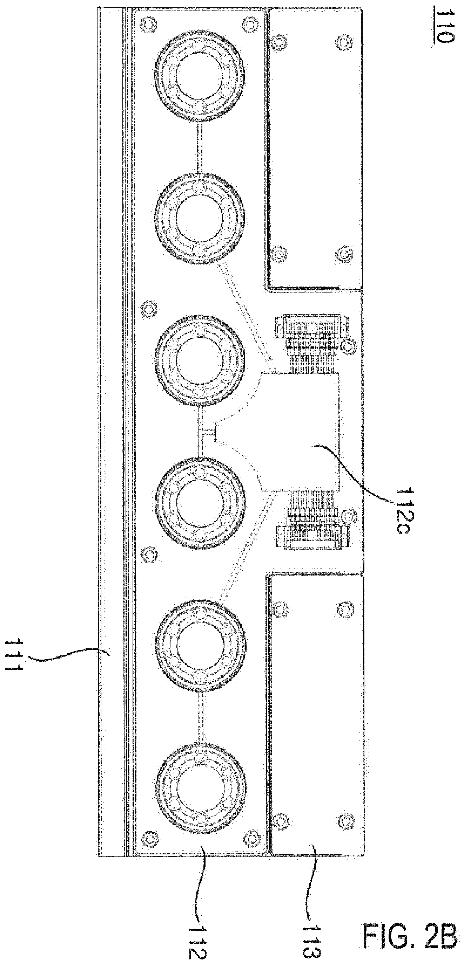

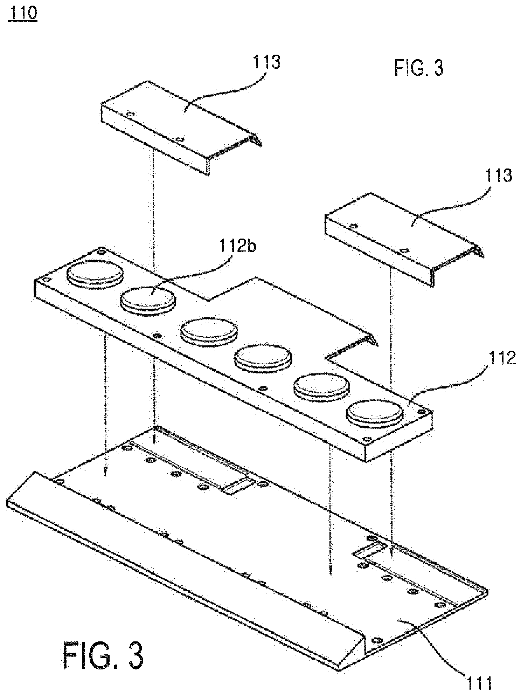

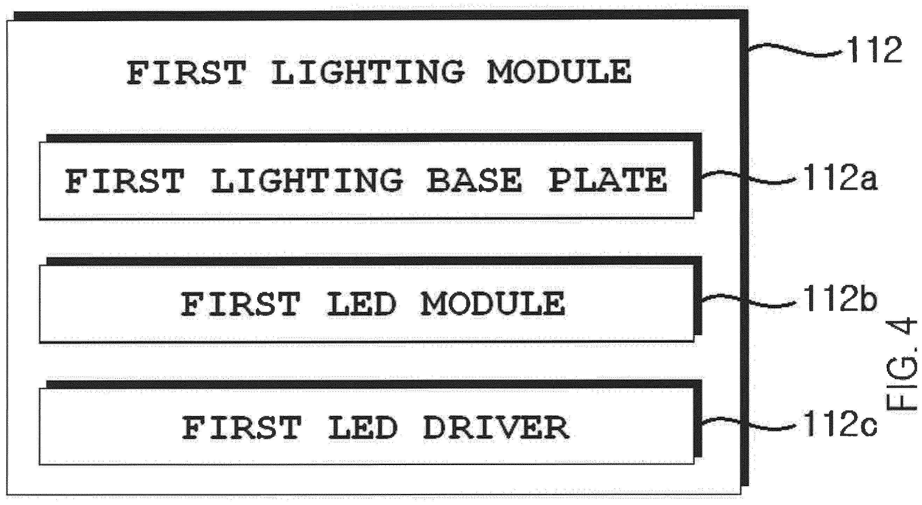

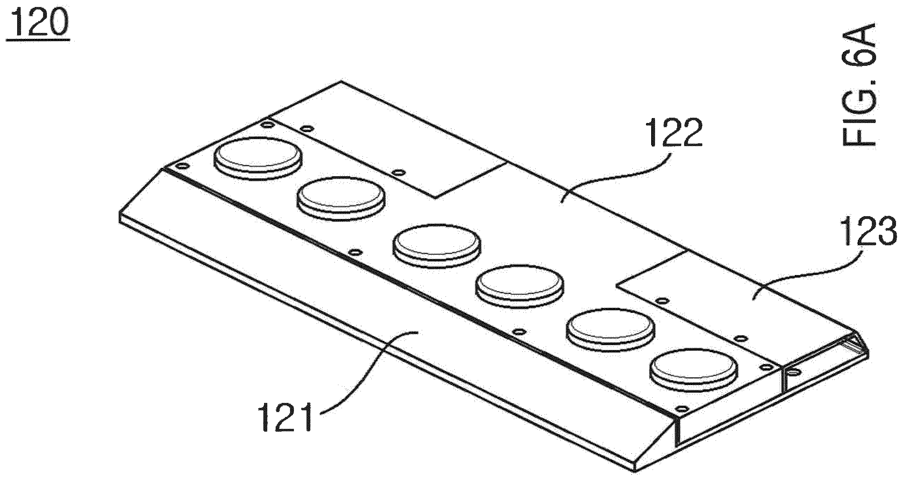

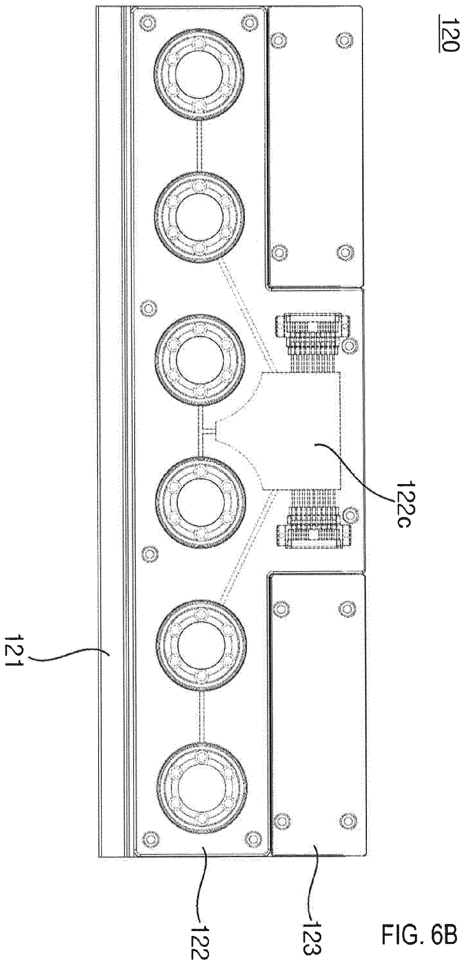

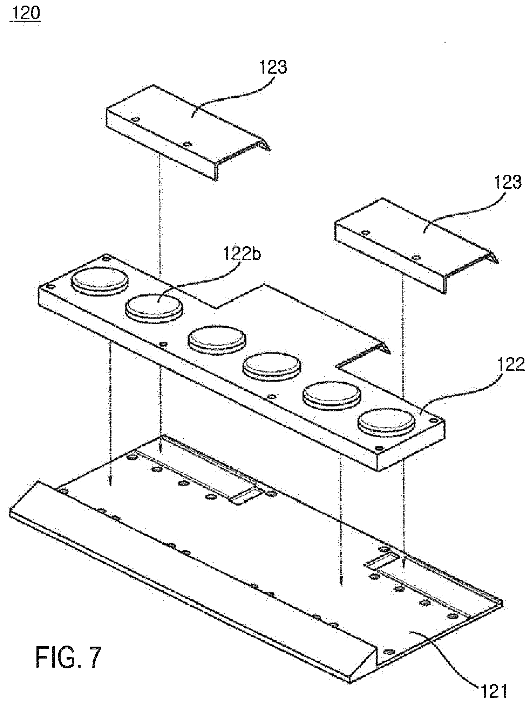

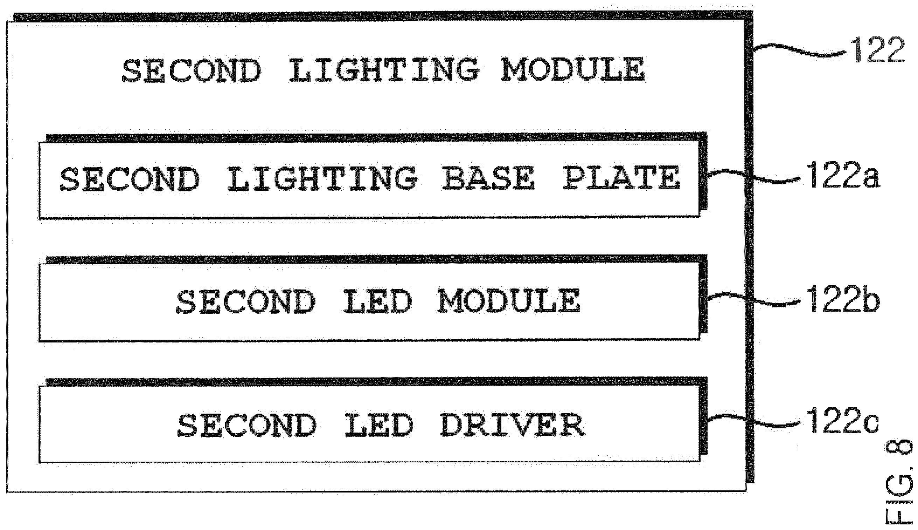

FIG. 1 is a view schematically showing the configuration of an LED lighting apparatus 100 with a dual lighting system for a helicopter landing area, FIGS. 2A and 2B are views schematically showing the entire shape of a first lighting assembly 110 shown in FIG. 1, FIG. 3 is an exploded view showing the parts of the first lighting assembly 110 shown in FIGS. 2A and 2B, FIG. 4 is a view schematically showing the configuration of a first lighting module 112 shown in FIGS. 2A and 2B, FIGS. 6A and 6B are views schematically showing the entire shape of a second lighting assembly 120 shown in FIG. 1, FIG. 7 is an exploded view showing the parts of the second lighting assembly 120 shown in FIGS. 6A and 6B, FIG. 8 is a view schematically showing the configuration of a second lighting module 122 shown in FIGS. 6A and 6B.

Referring to FIGS. 1 to 7, an LED lighting apparatus 100 with a dual lighting system for a helicopter landing area according to an embodiment of the present invention includes a plurality of first lighting assemblies 110, a plurality of second lighting assemblies 120, a power supply 130, and a controller 140, and may include a second lighting assembly 120' having two LED light sources.

First, the first lighting assemblies 110 are circularly connected to form a circle marking in a size that is half the size of a helideck on a helicopter landing area.

The first lighting assemblies 110 are separately operated by power from the power supply 130 and the number of the first lighting assemblies 110 may be changed without a limit in accordance with the size of the circular marking of the helideck.

The structure of the first lighting assemblies 110 is described in detail with reference to FIGS. 2A to 3.

Referring to FIGS. 2A to 3, the first lighting assembly 110 may include a first base plate 111, a first lighting module 112, and first covers 113. The first lighting assembly 110 can be electrically connected with another adjacent first lighting assembly through first connection cables 114 and can receive power or a status change signal from the adjacent first lighting assembly.

The first base plate 111 can be permanently fixed by rivets to a circular marking on a helideck, a plurality of rivet holes may be formed through the first base plate 111 for easy installation, and the positions of the rivet holes can be freely selected in accordance with the shapes of helidecks.

The first base plate 111 is a part that is riveted first of the parts of the first lighting assembly 110, and the first lighting module 112 and the first covers 113 to be described below can be installed after the first base plate 111 is installed.

The first lighting module 112 may be coupled (connected) to the top of the first base plate 111 and may be bolted to the first base plate 111 substantially as an important part including LED light sources. The reason of bolting the first lighting module 112 to the first base plate 111 is for making following maintenance easy, and the number, size, and position of bolts are not limited.

The structure of the first lighting module 112 is described in detail with reference to FIG. 4.

Referring to FIG. 4, the first lighting module 112 may include a first lighting base plate 112a coupled (or connected) to the top of the first base plate 111, a plurality of first LED modules 112b disposed on the first lighting base plate 112a, and a first LED driver 112c electrically connected with the first LED modules 112b and connected with the first connection cables 114 at a side thereof.

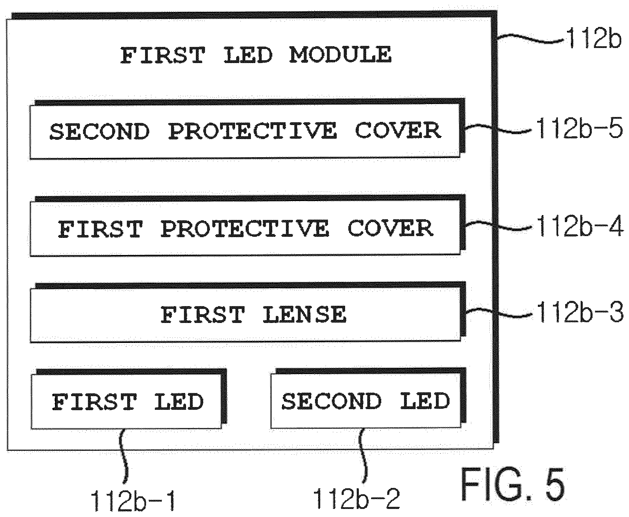

The configuration of the first LED modules 112b is described hereafter with reference to FIG. 5.

Referring to FIG. 5, the first LED modules 112b each include, sequentially from the bottom, first and second LEDs 112b-1 and 112b-2, optionally a first lens 112b-3, a first protective cover 112b-4, and a second protective cover 112b-5.

The first and second LEDs 112b-1 and 112b-2 have different colors.

The first lens 112b-3 is disposed over the first and second LEDs 112b-1 and 112b-2 and can change the vertical radiation angle of light emitted up from the first and second LEDs 112b-1 and 112b-2 at about 120 to 140 degrees to the horizontal direction.

The first protective cover 112b-4 is disposed over the first lens 112b-3 and under the second protective cover 112b-5 and may be made of opaque yellow plastic resin. The first protective cover 112b-4 partially covers a light source that vertically faces up, so backlight can be reduced, which can be advantageous in securing the visual field of a pilot who lands a helicopter.

The second protective cover 112b-5, which is a part exposed to the outside substantially at the uppermost position, is supposed to be always exposed to UV, so transparent plastic resin having high properties against UV may be used.

The first LED driver 112c, which is a driver for controlling the first LED modules 112b, can transmit a status information signal showing the result of checking the operation statuses of the first LED modules 112b to the controller 140 and control the operation statuses of the first LED modules 112b on the basis of a status change signal from the controller 140.

The process of controlling the operation statuses of the first LED modules 112b through the first LED driver 112c will be described below.

The first cover 113 is coupled (connected) to the first base plate 111 and covers and protects the tops of the first connection cables 114 connecting the first lighting module 112 with another adjacent first lighting module.

Two first covers 113 may be provided for each of the first lighting assemblies 110 and they can also be bolted to the first base plate 111, similar to the first lighting module 112, so they can be easily separated by loosening the bolts.

Next, the second lighting assemblies 120 form a symbol marking in the circular marking formed by the first lighting assemblies 110 on the helideck in a helicopter landing area. The symbol marking may mean the mark 'H' generally drawn in helicopter landing areas, but it may be various letters, numbers, or figures other the 'H', so it should be noticed that the term 'symbol marking' is used in combination of them herein.

The second lighting assemblies 120 are separately operated by power from the power supply 130 and the number of the second lighting assemblies 120 may be changed without a limit in accordance with the size of the symbol marking (H marking) of the helideck.

The structure of the second lighting assemblies 120 is described in detail with reference to FIGS. 6A to 7.

Referring to FIGS. 6A to 7, the second lighting assembly 120 may include a second base plate 121, a second lighting module 122, and second covers 123. The second lighting assembly 110 can be electrically connected with another adjacent second lighting assembly through second connection cables 124 and can receive power or a status change signal from the adjacent second lighting assembly.

The second base plate 121 can be permanently fixed by rivets to a symbol marking (H marking) on a helideck, a plurality of rivet holes may be formed through the second base plate 121 for easy installation, and the positions of the rivet holes can be freely selected in accordance with the shapes of symbol markings on helidecks.

The second base plate 121 is a part that is riveted first of the parts of the second lighting assembly 120, and the second lighting module 122 and the second covers 123 to be described below can be installed after the second base plate 121 is installed.

The second lighting module 122 may be coupled (connected) to the top of the second base plate 121 and may be bolted to the second base plate 121 substantially as an important part including LED light sources. The reason of bolting the second lighting module 122 to the second base plate 121 is for making following maintenance easy, and the number, size, and position of bolts are not limited.

The structure of the second lighting module 122 is described in detail with reference to FIG. 8.

Referring to FIG. 8, the second lighting module 122 may include a second lighting base plate 122a coupled (or connected) to the top of the second base plate 121, a plurality of second LED modules 122b disposed on the second lighting base plate 122a, and a second LED driver 122c electrically connected with the second LED modules 122b and connected with the second connection cables 124 at a side thereof.

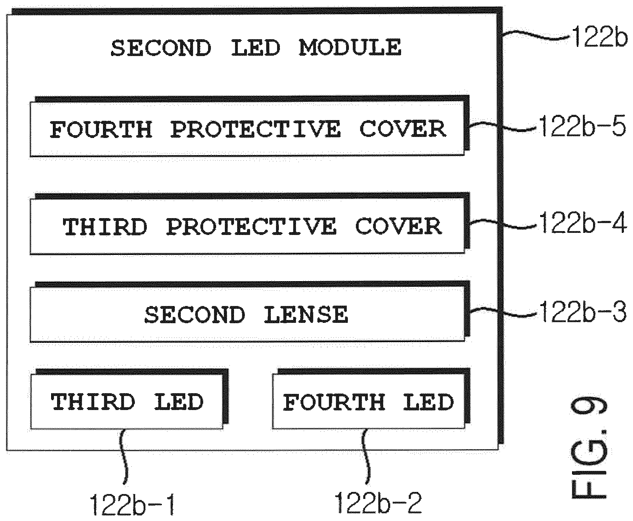

The configuration of the second LED modules 112b is described hereafter with reference to FIG. 9. Referring to FIG. 9, the second LED modules 122b include, sequentially from the bottom, third and fourth LEDs 122b-1 and 122b-2, and, optionally, a second lens 122b-3, a third protective cover 122b-4, and a fourth protective cover 122b-5.

The third and fourth LEDs 122b-1 and 122b-2 have different colors.

The second lens 122b-3 is disposed over the third and fourth LEDs 122b-1 and 122b-2 and can change the vertical radiation angle of light emitted up from the third and fourth LEDs 122b-1 and 122b-2 at about 120 to 140 degrees to the horizontal direction.

The third protective cover 122b-4 is disposed over the second lens 122b-3 and under the fourth protective cover 122b-5 and may be made of opaque white plastic resin. The third protective cover 122b-4 partially covers a light source that vertically faces up, so backlight can be reduced, which can be advantageous in securing the visual field of a pilot who lands a helicopter.

The fourth protective cover 122b-5, which is a part exposed to the outside substantially at the uppermost position, is supposed to be always exposed to UV, so transparent plastic resin having high properties against UV may be used.

The second LED driver 122c, which is a driver for controlling the second LED modules 122b, can transmit a status information signal showing the result of checking the operation statuses of the second LED modules 122b to the controller 140 and control the operation statuses of the second LED modules 122b on the basis of a status change signal from the controller 140.

The process of controlling the operation statuses of the second LED modules 122b through the second LED driver 122c will be described below.

The second cover 123 is coupled (connected) to the second base plate 121 and covers and protects the tops of the second connection cables 124 connecting the second lighting module 122 with another adjacent second lighting module.

Two second covers 123 may be provided for each of the second lighting assemblies 120 and they can also be bolted to the second base plate 121, similar to the second lighting module 122, so they can be easily separated by loosening the bolts.

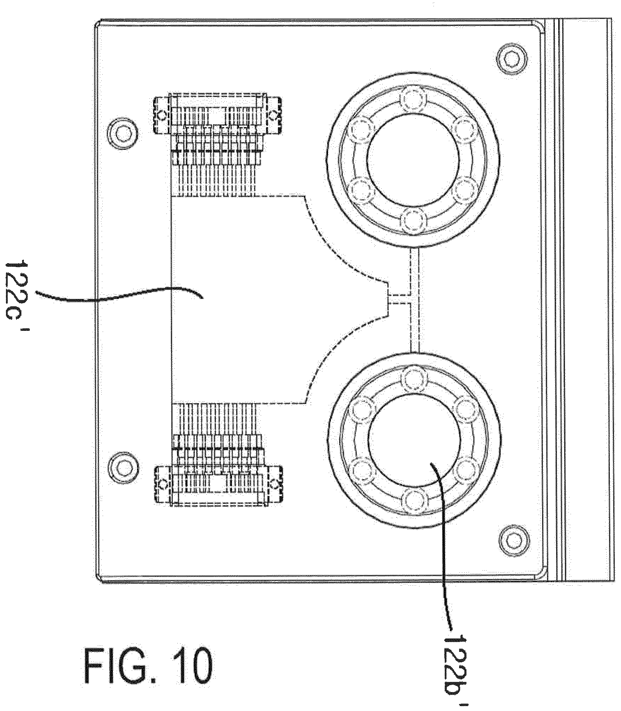

The second lighting assemblies 120 each may be provided with only two second LED modules 122b, which is described with reference to FIG. 10.

FIG. 10 is a view showing a second lighting assembly 120' having two second LED modules 122b and it can be seen from FIG. 10 that the other parts are the same, but there are provided not six, but two second LED modules 122b. This confirmation is used to show the middle horizontal line of a symbol 'H' using two second lighting assemblies 120, as shown in FIG. 1, and it can be seen that the length is smaller as compared with the second lighting assemblies 120.

A second LED driver 122c' of the second lighting assembly 120' having two second LED modules 122b may be connected to another adjacent second LED driver 122c through second connection cables 124.

The power supply 130 applies electric energy to activate LED components of first and second lighting assemblies 110 and 120 by supplying power to the lighting assemblies.

The controller 140 receives status information signals about the operation statuses of LED components from the first and second LED drivers 112c and 122c of the first and second lighting assemblies 110 and 120, generates status change signals for turning on/off the first and second lighting assemblies 110 and 120 on the basis of the status information signals, and then transmits the status change signals to the first and second LED drivers 112c and 122c.

The status change signals may include: a first operation mode signal for operating all of the first to fourth LEDs 112b-1, 112b-2, 122b-1, and 122b-2 at 60 cd or less; a second operation mode signal for operating all of the first to fourth LEDs 112b-1, 112b-2, 122b-1, and 122b-2 at 60 cd or more with twice a brightness in comparison to the first operation mode signal; a third operation mode signal for operating the first and second LEDs 112b-1 and 112b-2 at 60 cd or less or operating the third and fourth LEDs 122b-1 and 122b-2 at 60 cd or less; and a fourth operation mode signal for operating the first and second LEDs 112b-1 and 112b-2 at 60 cd or less with twice a brightness in comparison to the third operation mode signal or operating the third and fourth LEDs 122b-1 and 122b-2 at 60 cd or less with twice a brightness in comparison to the third operation mode signal.

Accordingly, when the first and second LED drivers 112c and 122c receive the first to fourth operation mode signals, they control the first to fourth LEDs 112b-1, 112b-2, 122b-1, and 122b-2 in different ways depending on the operation mode signals.

In an embodiment, the status change signals may include a fifth operation mode signal for showing the direction of wind by turning on and off the second LED 112b-2 on the basis of wind direction information.

In detail, in an embodiment, the first LED 112b-1 may be given yellow and the second to fourth LEDs 112b-2, 122b-1, and 122b-2 may be given green, and when the first LED driver 112c receives the fifth operation mode signal, the second LED 112b-2 corresponding to the wind direction information starts to be turned on and off so that a helicopter driver can recognize the current direction of wind through turning-on/off of the green light sources.

When the fifth operation mode signal is received, the first LED driver 112c turns on the first LED 112b-1 to continuously emit yellow light and turns on an off the second LED 112b-2 having a green color on the basis of wind direction information received from the controller 140.

Further, the first and second LED drivers 112c and 122c detect in real time the operation statuses of the first to fourth LEDs 112b-1, 112b-2, 122b-1, and 122b-2, and when the third operation mode signal or the fourth operation mode signal is received from the controller 140, the first and second LED drivers make the second LED 112b-2 automatically operate when the first LED 112b-1 abnormally operates, and make the first LED 112b-1 automatically operate when the second LED 112b-2 abnormally operates.

Similarly, when the third LED 122b-1 abnormally operates, the fourth LED 122b-2 is automatically operated, and when the fourth LED 122b-2 abnormally operates, the third LED 122b-1 is automatically operated.

Accordingly, the first to fourth LEDs 112b-1, 112b-2, 122b-1, and 122b-2 can keep being operated even at night regardless of whether they break, the lifespan is expired, and there is an expected error by the first and second LED drivers 112c and 122c.

In another embodiment of the present invention, when the first to fourth LEDs 112b-1, 112b-2, 122b-1, and 122b-2 abnormally operate, the first and second LED drivers 112c and 122c transmit a failure alarm signal to the controller 140 and the alarm (not shown) connected with the controller 140 can generate an alarm event (for example, turns on and off an alarming LED light source or outputs a sound through a speaker) on the basis of the failure alarm signal.

Although the status change signals that are received from the controller 140 are described as first to fifth operation mode signals in the present invention, the status change signals are not limited to the five signals and additional status change signals may be further provided, depending on various turning-on/off signals (for example, when a helicopter takes off or lands and when objects and people gets on or out of a helicopter).

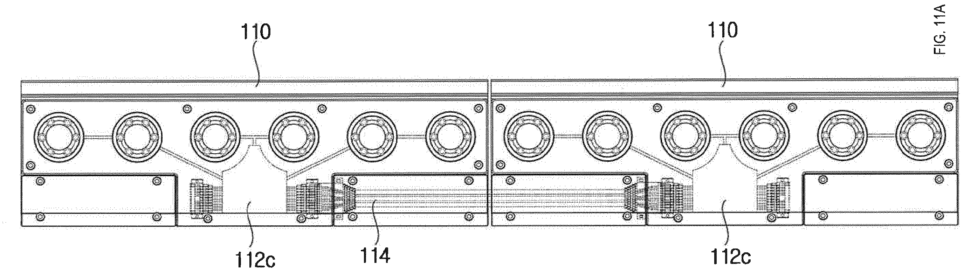

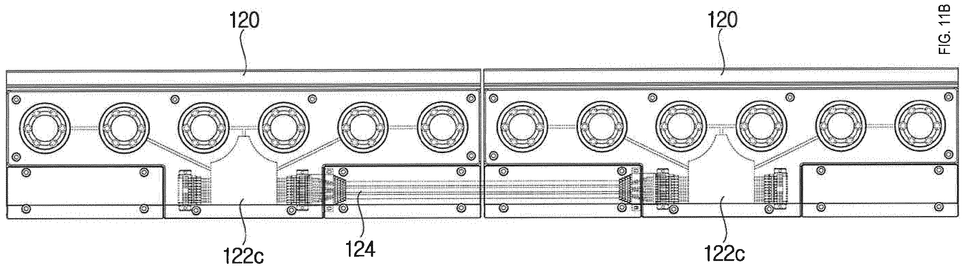

FIGS. 11A and 11B are views showing a plurality of first lighting assemblies 110 connected through first connection cables 114 and a plurality of second lighting assemblies 120 connected through second connection cables 124.

Referring to FIG. 11A, the first LED drivers 112c of the first lighting assemblies 110 are connected to each other through the first connection cables 114. Referring to FIG. 11B, the second LED drivers 122c of the second lighting assemblies 120 are connected to each other through the second connection cables 124.

A circular marking is formed when the first lighting assemblies 110 are connected in a circular shape through the first connection cables 114, and an H-shape marking is formed when the second lighting assemblies 120 are connected in an H-shape through the second connection cables 124.

## Claims

1. A LED lighting apparatus (100) with a dual lighting system for a helicopter landing area, the apparatus comprising:
a plurality of first lighting assemblies (110) circularly connected to form a circle marking in a size that is half the size of a helideck on a helicopter landing area and each including a first lighting module (112), wherein the first lighting module (112) includes:
a plurality of first LED modules (112b); and
a first LED driver (112c) electrically connected with the first LED modules (112b);
a plurality of second lighting assemblies (120) forming a symbol marking in the circular marking and each including a second lighting module (122), wherein the second lighting module (122) includes:
a plurality of second LED modules (122b); and
a second LED driver (122c) electrically connected with the second LED modules (122b);
a power supply (130) configured to supply power to the first and second lighting assemblies; and
a controller (140) configured to receive status information signals from the first and second LED drivers (112c, 122c) and transmit status change signals to the first and second LED drivers (112c, 122c),
wherein each first LED driver (112c) is configured to operate the plurality of first LED modules (112b) based on the transmitted status change signals, and
wherein each second LED driver (122c) is configured to operate the plurality of second LED modules (122b) based on the transmitted status change signals,
**characterized in that**
each of the plurality of first LED modules (112b) includes first and second LEDs (112b-1, 112b-2) having different colors,
each of the plurality of second LED modules (122b) includes third and fourth LEDs (122b-1, 122b-2) having different colors,
each first LED driver (112c) is configured to operate at least one of the first and second LEDs (112b-1, 112b-2) of each of the plurality of first LED modules (112b) based on the transmitted status change signals, and
each second LED driver (122c) is configured to operate at least one of the third and fourth LEDs (122b-1, 122b-2) of each of the plurality of second LED modules (122b) based on the transmitted status change signals.

2. The apparatus of claim 1, wherein each first lighting assembly (110) further includes:
a first base plate (111) configured to be fixed on the helideck and coupled with the first lighting module (112) on a top thereof; and
first covers (113) covering tops of first connection cables (114) connecting the first lighting module (112) and another adjacent first lighting module (112) to each other, and
each second lighting assembly (120) further includes:
a second base plate (121) configured to be fixed on the helideck and coupled with the second lighting module (122) on a top thereof; and
second covers (123) covering second connection cables (124) connecting the second lighting module (122) and another adjacent second lighting module (122) to each other.

3. The apparatus of claim 2, wherein the first and second base plates (111, 121) are configured to be riveted on the helideck.

4. The apparatus of claim 2, wherein the first and second lighting modules (112, 122) are bolted to the first and second base plates (111, 121), respectively.

5. The apparatus of claim 2, wherein each first lighting module (112) further includes:
a first lighting base plate (112a) fastened to the first base plate (111) and on which the plurality of first LED modules (112b) are disposed, wherein the first LED driver (112c) is connected with the first connection cables (114) at a side thereof, and
each second lighting module (122) further includes:
a second lighting base plate (122a) fastened to the second base plate (121) and on which the plurality of second LED modules (122b) are disposed, wherein the second LED driver (122c) is connected with the second connection cables (124) at a side thereof.

6. The apparatus of claim 5, wherein each of the plurality of first LED modules (112b) further includes:
a first lens (112b-3) disposed over the first and second LEDs (112b-1, 112b-2);
a first protective cover (112b-4) disposed over the first lens (112b-3); and
a second protective cover (112b-5) disposed over the first protective cover (112b-4), and
each of the plurality of second LED modules (122b) further includes:
a second lens (122b-3) disposed over the third and fourth LEDs (122b-1, 122b-2);
a third protective cover (122b-4) disposed over the second lens (122b-3); and
a fourth protective cover (122b-5) disposed over the third protective cover (122b-4).

7. The apparatus of claim 1, wherein the first and second LEDs (112b-1, 112b-2) have a yellow color, and the third and fourth LEDs (122b-1, 122b-2) have a green color.

8. The apparatus of claim 6, wherein the first and second lenses (112b-3, 122b-3) are configured to change radiation angles of the first to fourth LEDs (112b-1, 112b-2, 122b-1, 122b-2).

9. The apparatus of claim 6, wherein the first and third protective covers (112b-4, 122b-4) are made of yellow plastic resin and opaque white plastic resin, respectively.

10. The apparatus of claim 6, wherein the second and fourth protective covers (112b-5, 122b-5) are made of plastic resin that is not damaged or deformed by UV.

11. The apparatus of claim 1, wherein the status change signals that are transmitted from the controller (140) include:
a first operation mode signal for operating all of the first to fourth LEDs (112b-1, 112b-2, 122b-1, 122b-2) at 60 cd or less;
a second operation mode signal for operating all of the first to fourth LEDs (112b-1, 112b-2, 122b-1, 122b-2) at 60 cd or more with twice a brightness in comparison to the first operation mode signal;
a third operation mode signal for operating the first and second LEDs (112b-1, 112b-2) at 60 cd or less or operating the third and fourth LEDs (122b-1, 122b-2) at 60 cd or less;
a fourth operation mode signal for operating the first and second LEDs (112b-1, 112b-2) at 60 cd or less with twice a brightness in comparison to the third operation mode signal or operating the third and fourth LEDs (122b-1, 122b-2) at 60 cd or less with twice a brightness in comparison to the third operation mode signal; and
a fifth operation mode signal for turning on the first LED (112b-1) having a yellow color and keeping the first LED (112b-1) turned on and turning on and off the second LED (112b-2) having a green color, depending on wind direction information.

12. The apparatus of claim 11, wherein the first and second LED drivers (112c, 122c) are configured to detect in real time operation statuses of the first to fourth LEDs (112b-1, 112b-2, 122b-1, 122b-2), and
wherein when receiving the third operation mode signal or the fourth operation mode signal, the first and second LED drivers (112c, 122c) are configured to:
operate the second LED (112b-2) when the first LED (112b-1) abnormally operates,
operate the first LED (112b-1) when the second LED (112b-2) abnormally operates,
operate the fourth LED (122b-2) when the third LED (122b-1) abnormally operates, and
operate the third LED (122b-1) when the fourth LED (122b-2) abnormally operates.

13. The apparatus of claim 12, wherein when the first to fourth LEDs (112b-1, 112b-2, 122b-1, 122b-2) abnormally operate, the first and second LED drivers (112c, 122c) are configured to transmit a failure alarm signal to the controller (140) and an alarm connected to the controller (140) generates an alarm even on the basis of the failure alarm signal.

## Patentansprüche

1. LED-Beleuchtungseinrichtung (100) mit einem Dual-Beleuchtungssystem für einen Hubschrauberlandebereich, wobei die Einrichtung umfasst:
eine Vielzahl von ersten Beleuchtungsbaugruppen (110), die kreisförmig verbunden sind, um eine Kreismarkierung in einer Größe, die die Hälfte der Größe eines Hubschrauberdecks auf einem Hubschrauberlandebereich ist, auszubilden, und jeweils ein erstes Beleuchtungsmodul (112) umfassen, wobei das erste Beleuchtungsmodul (112) umfasst:
eine Vielzahl von ersten LED-Modulen (112b); und
einen ersten LED-Treiber (112c), der mit den ersten LED-Modulen (112b) elektrisch verbunden ist;
eine Vielzahl von zweiten Beleuchtungsbaugruppen (120), die eine Symbolmarkierung in der kreisförmigen Markierung ausbilden und jeweils ein zweites Beleuchtungsmodul (122) umfassen, wobei das zweite Beleuchtungsmodul (122) umfasst:
eine Vielzahl von zweiten LED-Modulen (122b); und
einen zweiten LED-Treiber (122c), der mit den zweiten LED-Modulen (122b) elektrisch verbunden ist;
eine Stromversorgung (130), die konfiguriert ist, um die erste und die zweite Beleuchtungsbaugruppe mit Strom zu versorgen; und
eine Steuervorrichtung (140), die konfiguriert ist, um Statusinformationssignale von dem ersten und dem zweiten LED-Treiber (112c, 122c) zu empfangen und Statusänderungssignale an den ersten und den zweiten LED-Treiber (112c, 122c) zu senden,
wobei jeder erste LED-Treiber (112c) konfiguriert ist, um die Vielzahl von ersten LED-Modulen (112b), die auf den gesendeten Statusänderungssignalen basieren, zu betreiben, und
wobei jeder zweite LED-Treiber (122c) konfiguriert ist, um die Vielzahl von zweiten LED-Modulen (122b), die auf den gesendeten Statusänderungssignalen basieren, zu betreiben,
**dadurch gekennzeichnet, dass**
jedes der Vielzahl von ersten LED-Modulen (112b) eine erste und eine zweite LED (112b-1, 112b-2), die unterschiedliche Farben aufweisen, umfasst,
jedes der Vielzahl von zweiten LED-Modulen (122b) eine dritte und eine vierte LED (122b-1, 122b-2), die unterschiedliche Farben aufweisen, umfasst,
jeder erste LED-Treiber (112c) konfiguriert ist, um die erste und/oder die zweite LED (112b-1, 112b-2) von jedem der Vielzahl von ersten LED-Modulen (112b) die auf den gesendeten Statusänderungssignalen basieren, zu betreiben, und
jeder zweite LED-Treiber (122c) konfiguriert ist, um die dritte und/oder die vierte LED (122b-1, 122b-2) von jedem der Vielzahl von zweiten LED-Modulen (122b), die auf den gesendeten Statusänderungssignalen basieren, zu betreiben.

2. Einrichtung nach Anspruch 1, wobei jede erste Beleuchtungsbaugruppe (110) ferner umfasst:
eine erste Grundplatte (111), die konfiguriert ist, um auf dem Hubschrauberdeck befestigt und mit dem ersten Beleuchtungsmodul (112) auf einer Oberseite davon gekoppelt zu werden; und
erste Abdeckungen (113), die die Oberseiten von ersten Verbindungskabeln (114) abdecken, die das erste Beleuchtungsmodul (112) und ein anderes angrenzendes erstes Beleuchtungsmodul (112) miteinander verbinden, und wobei jede zweite Beleuchtungsbaugruppe (120) ferner umfasst:
eine zweite Grundplatte (121), die konfiguriert ist, um auf dem Hubschrauberdeck befestigt und mit dem zweiten Beleuchtungsmodul (122) auf eine Oberseite davon gekoppelt zu werden; und
zweite Abdeckungen (123), die zweite Verbindungskabel (124) abdecken, die das zweite Beleuchtungsmodul (122) und ein anderes angrenzendes zweites Beleuchtungsmodul (122) miteinander verbinden.

3. Einrichtung nach Anspruch 2, wobei die erste und die zweite Grundplatte (111 121) konfiguriert sind, um auf dem Hubschrauberdeck vernietet zu werden.

4. Einrichtung nach Anspruch 2, wobei die ersten und die zweiten Beleuchtungsmodule (112, 122) mit der erste beziehungsweise der zweiten Grundplatte (111, 121) verschraubt sind.

5. Einrichtung nach Anspruch 2, wobei jedes erste Beleuchtungsmodul (112) ferner umfasst:
eine erste Beleuchtungsgrundplatte (112a), die an der ersten Grundplatte (111) angebracht ist und auf der die Vielzahl von ersten LED-Modulen (112b) angeordnet sind, wobei der erste LED-Treiber (112c) mit den ersten Verbindungskabeln (114) an einer Seite davon verbunden ist, und jedes zweite Beleuchtungsmodul (122) ferner umfasst:
eine zweite Beleuchtungsgrundplatte (122a), die an der zweiten Grundplatte (121) angebracht ist und auf der die Vielzahl von zweiten LED-Modulen (122b) angeordnet sind, wobei der zweite LED-Treiber (122c) mit den zweiten Verbindungskabeln (124) an einer Seite davon verbunden ist.

6. Einrichtung nach Anspruch 5, wobei jede der Vielzahl von ersten LED-Modulen (112b) ferner umfasst:
eine erste Linse (112b-3), die über der ersten und der zweiten LED (112b-1, 112b-2) angeordnet ist;
eine erste Schutzabdeckung (112b-4), die über der ersten Linse (112b-3) angeordnet ist; und
eine zweite Schutzabdeckung (112b-5), die über der ersten Schutzabdeckung (112b-4) angeordnet ist, und wobei jedes der Vielzahl von zweiten LED-Modulen (122b) ferner umfasst:
eine zweite Linse (122b-3), die über der dritten und der vierten LED (122b-1, 122b-2) angeordnet ist;
eine dritte Schutzabdeckung (122b-4), die über der zweiten Linse (122b-3) angeordnet ist; und
eine vierte Schutzabdeckung (122b-5), die über der dritten Schutzabdeckung (122b-4) angeordnet ist.

7. Einrichtung nach Anspruch 1, wobei die erste und die zweite LED (112b-1, 112b-2) eine gelbe Farbe aufweisen, und die dritte und die vierte LED (122b-1, 122b-2) eine grüne Farbe aufweisen.

8. Einrichtung nach Anspruch 6, wobei die erste und die zweite Linse (112b-3, 122b-3) konfiguriert sind, um Strahlungswinkel der ersten bis vierten LED (112b-1, 112b-2, 122b-1, 122b-2) zu ändern.

9. Einrichtung nach Anspruch 6, wobei die erste und die dritte Schutzabdeckung (112b-4, 122b-4) aus gelbem Kunststoffharz bzw. opakweißem Kunststoffharz hergestellt sind.

10. Einrichtung nach Anspruch 6, wobei die zweite und die vierte Schutzabdeckung (112b-5, 122b-5) aus Kunststoffharz hergestellt sind, das nicht beschädigt oder durch UV verformt ist.

11. Einrichtung nach Anspruch 1, wobei die Statusänderungssignale, die von der Steuervorrichtung (140) gesendet werden umfassen:
ein erstes Betriebsmodussignal zum Betreiben aller der ersten bis vierten LEDs (112b-1, 112b-2, 122b-1, 122b-2) bei höchstens 60 cd;
ein zweites Betriebsmodussignal zum Betreiben aller der ersten bis vierten LEDs (112b-1, 112b-2, 122b-1, 122b-2) bei wenigstens 60 cd mit einer doppelten Helligkeit im Vergleich zu dem ersten Betriebsmodussignal;
ein drittes Betriebsmodussignal zum Betreiben der ersten und der zweiten LEDs (112b-1, 112b-2) bei höchstens 60 cd oder zum Betreiben der dritten und der vierten LED (122b-1, 122b-2) bei höchstens 60 cd;
ein viertes Betriebsmodussignal zum Betreiben der ersten und der zweiten LEDs (112b-1, 112b-2) bei höchstens 60 cd mit einer doppelten Helligkeit im Vergleich zu dem dritten Betriebsmodussignal oder zum Betreiben der dritten und der vierten LEDs (122b-1, 122b-2) bei höchstens 60 cd mit einer doppelten Helligkeit im Vergleich zu dem dritten Betriebsmodussignal; und
ein fünftes Betriebsmodussignal zum Einschalten der ersten LED (112b-1), die eine gelbe Farbe aufweist, und zum eingeschaltet Lassen der ersten LED (112b-1) und zum Ein- und Ausschalten der zweiten LED (112b-2), die eine grüne Farbe aufweist, abhängig von einer Windrichtungsinformation.

12. Einrichtung nach Anspruch 11, wobei der erste und der zweite LED-Treiber (112c, 122c) konfiguriert sind, um in Echtzeit Betriebsstatus der ersten bis vierten LEDs (112b-1, 112b-2, 122b-1, 122b-2) zu erfassen, und
wobei, wenn das dritte Betriebsmodussignal oder das vierte Betriebsmodussignal empfangen wird, der erste und der zweite LED-Treiber (112c, 122c) konfiguriert sind, um:
die zweite LED (112b-2) zu betreiben, wenn die erste LED (112b-1) nicht ordnungsgemäß funktioniert,
die erste LED (112b-1) zu betreiben, wenn die zweite LED (112b-2) nicht ordnungsgemäß funktioniert,
die vierte LED (122b-2) zu betreiben, wenn die dritte LED (122b-1) nicht ordnungsgemäß funktioniert, und
die dritte LED (122b-1) zu betreiben, wenn die vierte LED (122b-2) nicht ordnungsgemäß funktioniert.

13. Einrichtung nach Anspruch 12, wobei, wenn die erste bis vierte LEDs (112b-1, 112b-2, 122b-1, 122b-2) nicht ordnungsgemäß funktionieren, der erste und der zweite LED-Treiber (112c, 122c) konfiguriert sind, um ein Fehleralarmsignal an die Steuervorrichtung (140) zu senden, und ein Alarm, der mit der Steuervorrichtung (140) verbunden ist, einen Alarm selbst auf der Basis des Fehleralarmsignals erzeugt.

## Revendications

1. Appareil d'éclairage à diode électroluminescente (100) comprenant un système d'éclairage double pour une zone d'atterrissage d'hélicoptère, l'appareil comprenant :
une pluralité de premiers ensembles d'éclairage (110) connectés circulairement pour former un repère circulaire de la taille de la moitié de la taille d'une héliplate-forme sur une zone d'atterrissage d'hélicoptère et chacun comprenant un premier module d'éclairage (112), le premier module d'éclairage (112) comprenant :
une pluralité de premiers modules de diode électroluminescente (112b) ; et
un premier pilote de diode électroluminescente (112c) connecté électriquement au premier module de diode électroluminescente (112b) ;
une pluralité de seconds ensembles d'éclairage (120) formant un repère de symbole dans le repère circulaire et chacun comprenant un second module d'éclairage (122), le second module d'éclairage (122) comprenant :
une pluralité de seconds modules de diode électroluminescente (122b) ; et
un second pilote de diode électroluminescente (122c) connecté électriquement aux seconds modules de diode électroluminescente (122b) ;
une alimentation électrique (130) conçue pour alimenter en électricité les premiers et seconds ensembles d'éclairages ; et
un organe de commande (140) conçu pour recevoir des signaux d'informations d'état en provenance des premier et second pilotes de diode électroluminescente (112c, 122c) et pour transmettre les signaux de changement d'état aux premier et second pilotes de diode électroluminescente (112c, 122c),
chaque premier pilote de diode électroluminescente (112c) étant conçu pour faire fonctionner la pluralité des premiers modules de diode électroluminescente (112b) en fonction des signaux de changement d'état transmis, et
chaque second pilote de diode électroluminescente (122c) étant conçu pour faire fonctionner la pluralité des seconds modules de diode électroluminescente (122b) en fonction des signaux de changement d'état transmis,
**caractérisé en ce que** chaque module de diode électroluminescente de la pluralité des premiers modules de diode électroluminescente (112b) comprenant des premières et des secondes diodes électroluminescentes (112b-1, 112b-2) ayant des couleurs différentes,
chaque module de diode électroluminescente de la pluralité des secondes modules de diode électroluminescente (122b) comprenant des troisièmes et des quatrièmes diodes électroluminescentes (122b-1, 122b-2) ayant des couleurs différentes,
chaque premier module de diode électroluminescente (112c) étant conçu pour faire fonctionner les premières et/ou les secondes diodes électroluminescentes (112b-1, 112-2) de chaque module de diode électroluminescente de la pluralité des premiers modules de diode électroluminescente (112b) en fonction des signaux de changement d'état transmis, et
chaque second pilote de diode électroluminescente (122c) étant conçu pour faire fonctionner les troisièmes et/ou les quatrième diodes électroluminescentes (122-1, 122b-2) de chaque module de diode électroluminescente de la pluralité des seconds modules de diode électroluminescente (122b) en fonction des signaux de changement d'état transmis.

2. Appareil selon la revendication 1, chaque premier ensemble d'éclairage (100) comprenant en outre :
une première plaque de base (111) conçue pour se fixer sur l'héliplate-forme et couplée au premier module d'éclairage (112) sur sa partie supérieure ; et
des premiers couvercles (113) recouvrant les couvercles des premiers câbles de connexion (114) connectant le premier module d'éclairage (112) et un autre premier module d'éclairage adjacent (112) entre eux, et
chaque second ensemble d'éclairage (120) comprenant en outre :
une seconde plaque de base (121) conçue pour se fixer sur l'héliplate-forme et couplée au second module d'éclairage (122) sur sa partie supérieure ; et
des seconds couvercles (123) recouvrant des seconds câbles de connexion (124) connectant le second module d'éclairage (122) et un autre second module d'éclairage adjacent (122) entre eux.

3. Appareil selon la revendication 2, les première et seconde plaques de base (111, 121) étant conçues pour être rivetées à l'héliplate-forme.

4. Appareil selon la revendication 2, les premier et second modules d'éclairage (112, 122) étant boulonnés aux première et seconde plaques de base (111, 121), respectivement.

5. Appareil selon la revendication 2, chaque premier module d'éclairage (112) comprenant en outre :
une première plaque de base d'éclairage (112a) fixée à la première plaque de base (111) et sur laquelle sont déposés la pluralité des premiers modules de diode électroluminescente (112b), le premier pilote de diode électroluminescente (112c) étant connecté aux premiers câbles de connexion (114) sur son côté, et
chaque second module d'éclairage (122) comprenant en outre :
une seconde plaque de base d'éclairage (122a) fixée à la seconde plaque de base (121) et sur laquelle sont disposées la pluralité des modules de diode électroluminescente (122b),
le second pilote de diode électroluminescente (122c) étant connecté avec les seconds câbles de connexion (124) sur son côté.

6. Appareil selon la revendication 5, chaque module de la pluralité de premiers modules de diode électroluminescente (112b) comprenant en outre :
une première lentille (112b-3) disposée sur les premières et secondes diodes électroluminescentes (112b-1, 112b-2) ;
un premier couvercle de protection (112b-4) disposé sur la première lentille (112b-3) ;
et
un second couvercle de protection (112b-5) disposé sur le premier couvercle de protection (112b-4), et
chaque second module de diode électroluminescente de la pluralité des secondes modules de diode électroluminescente (122b) comprenant en outre :
une seconde lentille (122b-3) disposée sur les troisième et quatrième diodes électroluminescentes (122b-1, 122b-4).

7. Appareil selon la revendication 1, les première et deuxième diodes électroluminescentes (112b-1, 112b-2) ayant une couleur jaune, et les troisième et quatrième diodes électroluminescentes (122b-1, 122b-2) ayant une couleur verte.

8. Appareil selon la revendication 6, les première et deuxième lentilles (112b-3, 122b-3) étant conçues pour modifier les angles de rayonnement de la première, de la deuxième, de la troisième et de la quatrième diodes électroluminescentes (112b-1, 112b-2, 122b-1, 122b-2).

9. Appareil selon la revendication 6, le premier et le troisième couvercle de protection (112b-4, 122b-4) étant constitués de résine en plastique jaune et de résine de plastique blanc opaque, respectivement.

10. Appareil selon la revendication 6, le deuxième et le quatrième couvercle de protection (112b-5, 122b-5) étant constitués de résine plastique qui n'est pas endommagée ou déformée par les UV.

11. Appareil selon la revendication 1, les signaux de changement d'état qui sont transmis par l'organe de commande (140) comprenant :
un premier signal de mode de fonctionnement pour faire fonctionner tout l'ensemble des premier, deuxième, troisième, quatrième diodes électroluminescentes (112b-1, 112b-2, 122b-1, 122b-2) à 60 Cd ou moins ;
un second signal de mode de fonctionnement pour faire fonctionner tout l'ensemble des premier, deuxième troisième, quatrième diodes électroluminescentes (112b-1, 112B-2, 122-1, 122b-2) à 60 Cd ou plus, avec le double de luminosité en comparaison avec le premier signal de mode de fonctionnement ;
un troisième signal de mode de fonctionnement pour faire fonctionner à première et la deuxième diode électroluminescente (112b-1, 112-B-2) à 60 Cd ou moins ou pour faire fonctionner la troisième et la quatrième diodes électroluminescentes (122b-1, 122b-2) à 60 Cd ou moins ;
un quatrième signal de mode de fonctionnement pour faire fonctionner la première et la deuxième diode électroluminescente (112b-1, 112-B-2) à 60 Cd ou moins avec le double de luminosité en comparaison avec le troisième signal de mode de fonctionnement ou pour faire fonctionner la troisième et la quatrième diodes électroluminescentes (122b-1, 122b-2) à 60 Cd avec le double de luminosité en comparaison avec le troisième signal de mode de fonctionnement ; et
un cinquième signal de mode de fonctionnement pour allumer la première diode électroluminescente (112b-1) ayant une couleur jaune et conservant la première diode électroluminescente (112b-1) allumée et pour allumer et éteindre la deuxième diode électroluminescente (112b-2) ayant une couleur verte, en fonction des informations du sens du vent.

12. Appareil selon la revendication 11, le premier le second pilote de diode électroluminescente (112c, 122c) étant conçus pour détecter en temps réel les états de fonctionnement de la premier, de la deuxième, de la troisième et de la quatrième diode électroluminescente (112b-1, 112b-2, 122b-1, 122b-2), et
lors de la réception du troisième signal de mode de fonctionnement ou du quatrième signal de mode de fonctionnement, le premier et le second pilote de diode électroluminescente (112c, 122c) étant conçus pour :
faire fonctionner la deuxième diode électroluminescente (112b-2) lorsque la première diode électroluminescente (112b-1) fonctionne anormalement,
faire fonctionner la première diode électroluminescente (112b-1) lorsque la deuxième diode électroluminescente (112b-2) fonctionne anormalement,
faire fonctionner la quatrième diode électroluminescente (122b-2) lorsque la troisième diode électroluminescente (122b-1) fonctionne anormalement, et
faire fonctionner la troisième diode électroluminescente (122b-1) lorsque la quatrième diode électroluminescente (122b-2) fonctionne anormalement.

13. Appareil selon la revendication 12, lorsque la première, la deuxième, la troisième, la quatrième diode électroluminescente (112b-1, 112b-2, 122b-1, 122b-2) fonctionnent anormalement, le premier et le second pilote de diode électroluminescente (112c, 122c) étant conçus pour transmettre un signal d'alarme de défaillance à l'organe de commande (140) et une alarme connectée à l'organe de commande (140) générant un événement d'alarme sur la base du signal d'alarme de défaillance.
